# FASCICULE DE BREVET EUROPEEN

(11) **EP 3 630 420 B1**
(45) Date de publication et mention de la délivrance du brevet: **14.12.2022**
(21) Numéro de dépôt: 18726818.0
(22) Date de dépôt: 29.05.2018
(51) Int. Cl.: B25J 9/16

(54) **PROCÉDÉ DE CONTRÔLE DE LA SURFACE D'UNE PIÈCE PAR UN CAPTEUR ROBOTISÉ**
VERFAHREN ZUR STEUERUNG DER OBERFLÄCHE EINES TEILS MITTELS EINES AUTOMATISIERTEN SENSORS
METHOD FOR CONTROLLING THE SURFACE OF A PART BY MEANS OF AN AUTOMATED SENSOR

(30) Priorité: 30.05.2017 FR 1754768
(43) Date de publication de la demande: 08.04.2020
(73) Titulaire: FRAMATOME, 92400 Courbevoie (FR)
(72) Inventeur: CAULIER, Yannick, 04100 Manosque (FR)
(74) Mandataire: Lavoix
(86) Numéro de dépôt international: PCT/EP2018/063998
(87) Numéro de publication internationale: WO 2018/219902

(56) Documents cités:
- EP-A2- 1 798 616
- WO-A1-2014/145471
- DE-A1-102004 007 829
- FR-A1- 2 940 449
- US-A1- 2002 169 586
- TARABANIS K A ET AL: "THE MVP SENSOR PLANNING SYSTEM FOR ROBOTIC VISION TASKS", IEEE TRANSACTIONS ON ROBOTICS AND AUTOMATION, IEEE INC, NEW YORK, US, vol. 11, no. 1, 1 février 1995 (1995-02-01), pages 72-85, XP000487944, ISSN: 1042-296X, DOI: 10.1109/70.345939

## Description

La présente invention concerne en général les procédés de contrôle non destructif (CND) de pièces de formes complexes.

Plus précisément, l'invention concerne un procédé de contrôle de la surface d'une pièce par un capteur déplacé par un robot.

Le document FR 2 940 449 A1 décrit un procédé de contrôle non destructif d'une pièce mécanique.

Le document WO 2014/145471 A1 décrit un système robotique autonome pour l'inspection de surfaces complexes.

Pour les pièces de formes complexes et de grandes tailles, il est essentiel de vérifier que toute la surface est contrôlable par le capteur, sans zone morte. Cette vérification est effectuée actuellement en utilisant les moyens suivants :
- calcul de la zone vue par le capteur, à une position donnée, effectué sur un logiciel de CAO ;
- simulation des déplacements du capteur à l'aide d'un outil de simulation robotique ;
- essais avec le capteur sur une ou des maquettes.

Ces moyens sont mal adaptés au calcul de la surface totale couverte par le capteur. La vérification est d'autant plus longue à effectuer que la géométrie de la surface est complexe et/ou que le nombre de paramètres d'acquisition du capteur est important.

Il existe donc un besoin d'un procédé permettant la prise en compte des paramètres de l'ensemble de la chaîne d'inspection : le capteur CND, le robot porteur et la pièce.

Dans ce contexte, l'invention porte sur un procédé de contrôle selon la revendication 1.

Ainsi, le procédé prévoit une première phase de simulation dans laquelle on vérifie par calcul si toute la surface est contrôlable ou pas, en prenant en compte à la fois la forme de la pièce, les caractéristiques du robot et les caractéristiques du capteur. Si certains éléments ou certaines zones ne peuvent pas être contrôlés entièrement, une nouvelle simulation peut être effectuée facilement, en modifiant les caractéristiques du capteur, en ajoutant des positions de contrôle ou en déplaçant certaines positions de contrôle.

La simulation permet de vérifier très aisément s'il est nécessaire de modifier la trajectoire du capteur, et si le robot peut déplacer le capteur selon la nouvelle trajectoire sans interférence avec la pièce.

Elle permet également de déterminer quelles sont les caractéristiques du capteur les plus appropriées pour une pièce donnée.

Le procédé peut également présenter une ou plusieurs des caractéristiques selon les revendications 2 à 8.

D'autres caractéristiques et avantages de l'invention ressortiront de la description détaillée qui en est donnée ci-dessous, à titre indicatif et nullement limitatif, en référence aux figures annexées parmi lesquelles :
- la figure 1 est un diagramme d'étape du procédé de l'invention ;
- la figure 2 est un diagramme illustrant les sous-étapes de l'étape de vérification par calcul que toute une zone est dans un champ de détection du capteur, sans élément masqué ;
- la figure 3 illustre un exemple de pièce de forme complexe pour laquelle le procédé de l'invention est bien adapté ;
- la figure 4 illustre un capteur et un robot susceptibles d'être mis en oeuvre dans le procédé de l'invention ;
- les figures 5 et 6 illustrent deux trajectoires possibles du capteur pour contrôler la pièce de la figure 3 ;
- les figures 7 à 9 illustrent schématiquement des sous-étapes de l'étape de vérification par calcul que toute la zone est dans un champ de détection du capteur, sans élément masqué ;
- la figure 10 montre schématiquement les zones couvertes par le capteur aux différentes positions de contrôle, superposées sur la pièce ; et
- la figure 11 illustre une variante de réalisation de l'invention dans laquelle le capteur est équipé d'un éclairage fixe, déplacé par le robot.

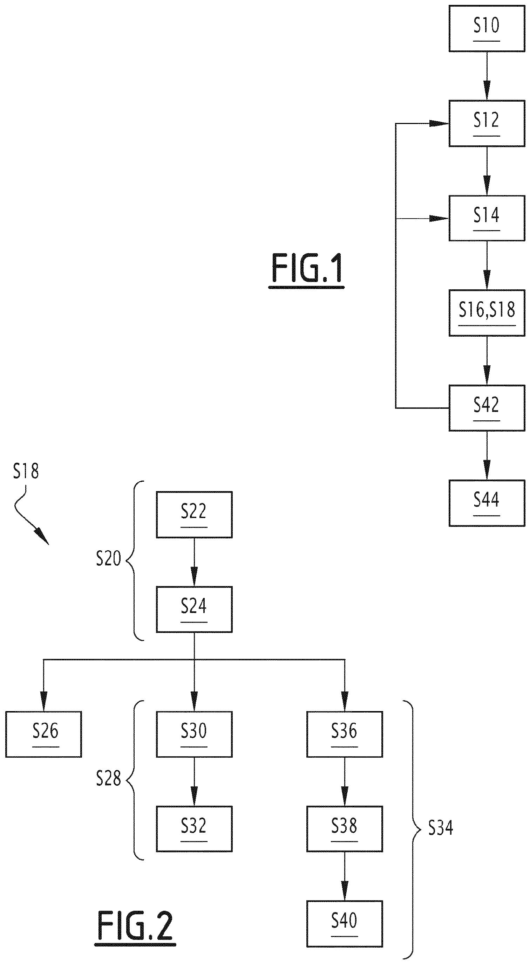

Le procédé illustré sur les figures 1 et 2 est destiné au contrôle de la surface d'une pièce par un capteur déplacé par un robot.

Le contrôle vise par exemple à détecter des défauts dans la surface de la pièce ou en profondeur sous la surface de la pièce.

Le procédé est spécialement adapté aux pièces et/ou aux surfaces de formes complexes.

La pièce est par exemple une pièce de réacteur nucléaire, tel qu'un interne de la cuve sous pression recevant le cœur du réacteur, un accessoire rapporté sur la cuve, une partie interne ou externe de la cuve ou encore un élément d'un générateur de vapeur.

La pièce par exemple est un bloc support-M, un arrondi de tubulure entre la cuve et une tubulure rattachée à la cuve, une tubulure du circuit primaire ou encore la soudure entre la plaque de partition et la plaque tubulaire du générateur de vapeur.

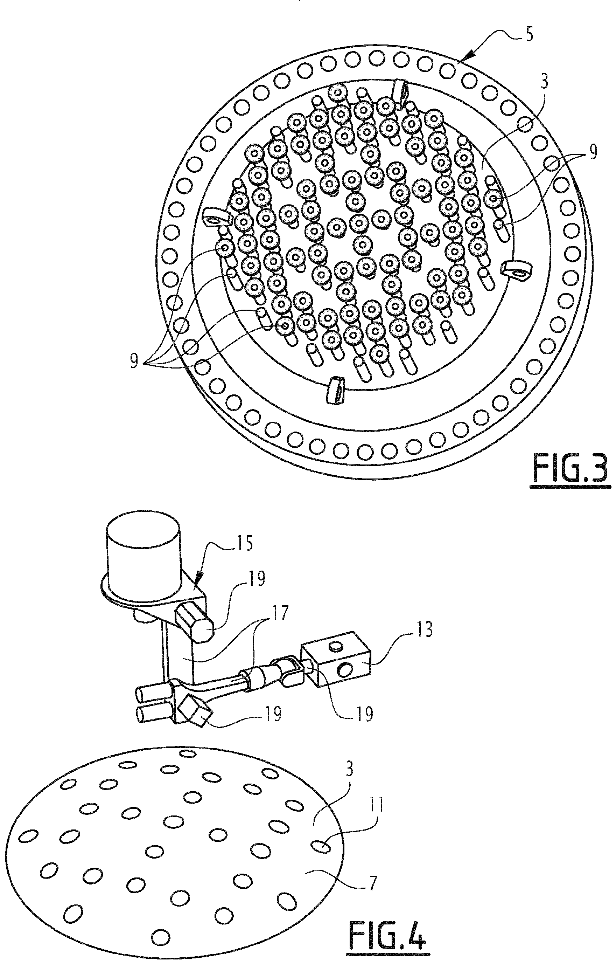

Il est par exemple bien adapté au contrôle de la surface 3 d'un couvercle de cuve 5 de réacteur nucléaire du type illustré sur la figure 3. La surface 3 est constituée d'un revêtement 7 déposé sur la calotte supérieure du couvercle 5. La forme du revêtement est illustrée sur le bas de la figure 4.

Un grand nombre de tubes 9 sont fixés au couvercle 5. Les tubes 9 sont des traversées permettant à des câbles ou des mécanismes non représentés de passer à travers le couvercle 5 de manière étanche. Les tubes 9 traversent le revêtement 7 à travers des trous 11 visibles sur la figure 4.

Les tubes 9 font saillie au-dessus de la surface et gênent le débattement du robot portant le capteur. Par ailleurs, les tubes 9 peuvent masquer certains points de la surface 3 lors du contrôle, s'ils sont dans le champ de détection du capteur. Ils peuvent donc créer des zones mortes, non contrôlables par le capteur.

Le capteur 13 est un capteur de contrôle non destructif.

Typiquement, le capteur 13 est un capteur optique, par exemple un appareil photographique, une caméra, un outil de contrôle thermographique.

En variante, le capteur 13 est un capteur de contrôle par courants de Foucault, un capteur de contrôle à ultrasons, un capteur de contrôle par rayons X, ou tout autre type de capteur.

Le robot 15 est de tout type adapté. Il comporte un nombre d'axes, c'est-à-dire de degrés de liberté, quelconque, choisi en fonction de la forme de la pièce à contrôler.

Le robot 15 est par exemple un bras manipulateur comme illustré sur la figure 4.

En variante, le robot 15 est une table à deux axes X et Y, ou est de tout autre type.

Comme illustré sur la figure 1, le procédé comporte une étape S10 d'obtention d'un modèle numérique de la pièce 5, incluant la surface 3 à contrôler.

Ce modèle numérique provient par exemple du concepteur ou du fabriquant de la pièce 5. Typiquement, il couvre non seulement la surface 3 mais aussi tous les éléments pouvant influencer les déplacements du robot 15 ou masquer les points de la surface 3 lors du contrôle, comme les tubes 9 dans l'exemple de la figure 3.

Le procédé comporte encore une étape S12 de détermination d'une trajectoire de contrôle pour le capteur 13 par rapport à la surface 3 en fonction des caractéristiques du robot 15 en utilisant le modèle numérique de la pièce 3.

La trajectoire est choisie de manière à permettre au capteur 13, sous réserve de vérifications postérieures, de contrôler toute la surface 3.

La trajectoire est à une, deux ou trois dimensions, en fonction du nombre de degrés de liberté du robot 15.

Elle est déterminée de manière à satisfaire plusieurs critères :
- être faisable compte tenu des dimensions et du nombre d'axes du robot 15 ;
- ne pas créer d'interférences entre le capteur 13 et les éléments de la pièce 5, ou entre le robot 15 et les éléments de la pièce 15 ;
- permettre au capteur 13 de couvrir toute la surface 3 lors des contrôles ;
- maintenir le capteur 13 dans une fourchette de distance prédéterminée par rapport à la surface 3.

Dans l'exemple du couvercle de cuve représenté sur les figures 3 et 4, la trajectoire est conçue de manière à éviter les interférences avec les tubes 9.

Dans l'exemple du bras manipulateur de la figure 4, la trajectoire est conçue en tenant compte des dimensions de chaque tronçon 17 du bras, ainsi que de l'orientation et de l'amplitude de rotation possible pour chaque articulation 19 du bras.

La fourchette de distance à la surface 3 est fonction du type de capteur utilisé et de ses caractéristiques. Elle correspond à la fourchette de distance de travail nominale typiquement utilisée pour le capteur.

La trajectoire est continue, ou comporte plusieurs tronçons disjoints les uns des autres.

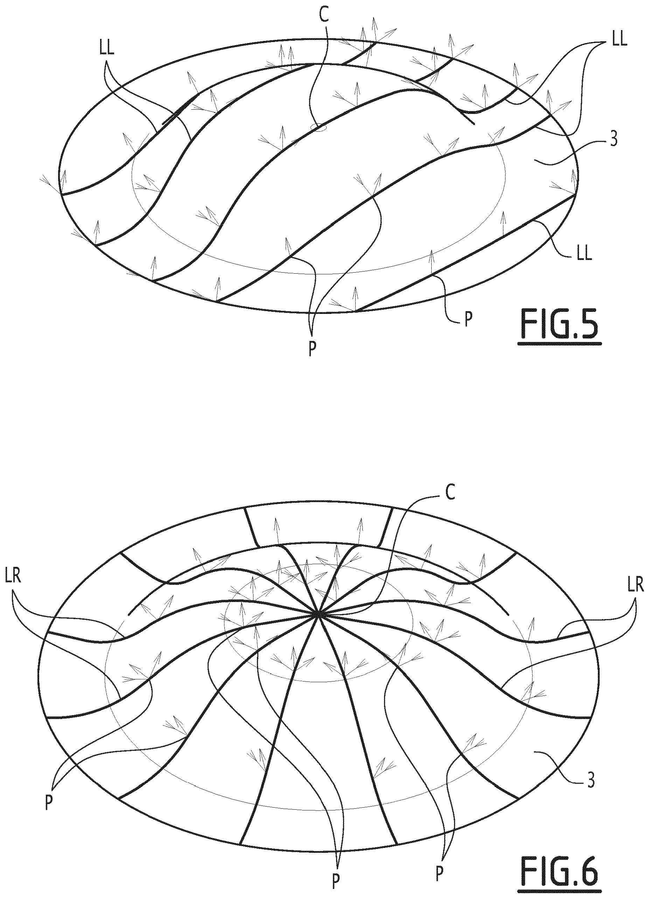

Les figures 5 et 6 illustrent des exemples de trajectoires possibles pour le contrôle du couvercle de cuve des figures 3 et 4.

Sur la figure 5, la trajectoire comporte plusieurs lignes longitudinales LL, s'étendant dans des plans sensiblement parallèles les uns aux autres. Les plans sont régulièrement espacés les uns des autres. Chaque ligne suit la surface, à une distance sensiblement constante de celle-ci. Une des lignes LL passe par le centre C de la calotte du couvercle, qui est aussi le centre de la surface 3. La trajectoire comporte 5 lignes au total.

Sur la figure 6, la trajectoire comporte plusieurs lignes radiales LR, s'étendant dans des plans sensiblement radiaux. Les plans se coupent selon une droite passant par le centre C de la calotte du couvercle et sensiblement normale au couvercle au centre C. Les plans sont angulairement régulièrement espacés les uns des autres. Chaque ligne part du centre C et suit la surface 3, à une distance sensiblement constante de celle-ci. La trajectoire comporte 12 lignes au total.

La trajectoire est déterminée en utilisant un logiciel de simulation de CND robotisé dans lequel le modèle numérique de la pièce 5 a été chargé.

Le procédé comporte encore une étape S14 de détermination de positions de contrôle du capteur 13 le long de la trajectoire en fonction de caractéristiques du capteur 13, en utilisant le modèle numérique de la pièce 5.

Les positions de contrôle sont les positions par rapport à la surface 3 auxquelles le capteur 13 va réaliser un contrôle d'une zone de la surface 3, c'est-à-dire acquérir des données ou effectuer des mesures caractérisant ladite zone.

Les positions de contrôle sont choisies de manière à ce que, sous réserve de vérifications postérieures, les zones contrôlées par le capteur 13 ensemble couvrent toute la surface 3, avec un chevauchement suffisant.

Les caractéristiques du capteur 13 prises en compte pour choisir les positions de contrôle comprennent au moins une distance entre le capteur 13 et la surface 3, et une orientation du capteur 13 par rapport à la surface 3.

La distance correspond à la fourchette de distance de travail nominale typiquement utilisée pour le capteur.

Pour un capteur optique, l'orientation du capteur 13 correspond à l'orientation de l'axe optique du capteur 13.

Quand le capteur 13 est de type optique, les caractéristiques du capteur comprennent typiquement aussi un angle d'ouverture du champ optique et une profondeur de champ.

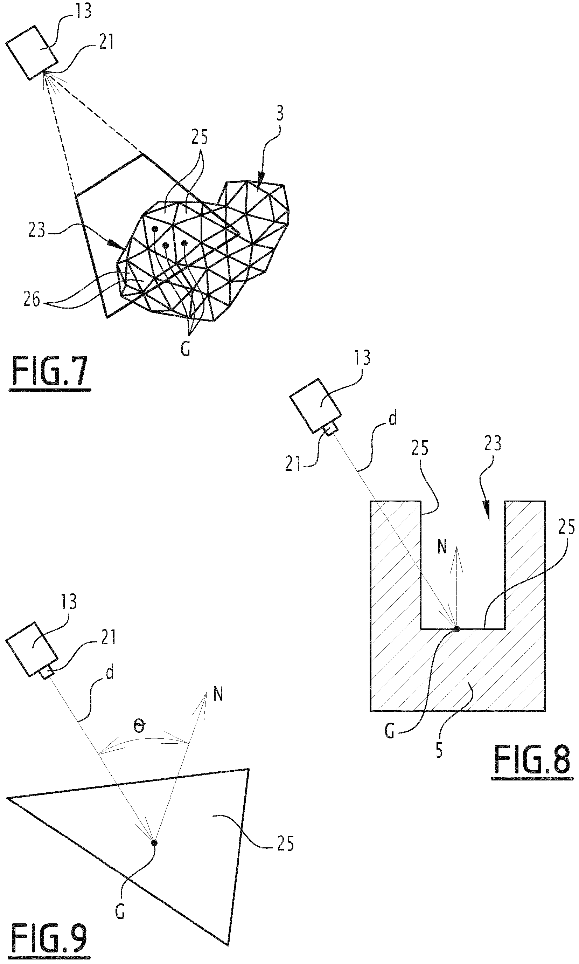

Comme illustré sur la figure 7, le champ optique présente, à partir de l'objectif 21 du capteur, la forme d'un tronc de cône divergeant. L'angle d'ouverture correspond à l'angle du tronc de cône.

Avantageusement, le capteur optique comprend un zoom. Dans ce cas, les caractéristiques du capteur 13 prises en compte pour déterminer les positions de contrôle comprennent aussi une plage de distance focale du zoom.

Dans l'exemple de la figure 5, les positions de contrôle P sont régulièrement espacées le long des lignes longitudinales LL.

Dans l'exemple de la figure 6, les positions de contrôle P sont choisies de manière à former une spirale s'enroulant autour du centre C de la calotte du couvercle.

Les positions de contrôle sont déterminées avantageusement en utilisant le logiciel de simulation utilisé à l'étape S12.

Le procédé comprend également une étape S16 de détermination par calcul de la zone 23 de la surface 3 contrôlée par le capteur 13 à chaque position de contrôle, en utilisant le modèle numérique de la pièce 5 et les caractéristiques du capteur 13.

Pour chaque position de contrôle, le champ de détection du capteur 13 est calculé, la zone 23 correspondant à l'intersection entre la surface 3 et le champ de détection (figure 7).

Pour un capteur optique, le champ de détection correspond au champ optique.

Le procédé comprend également, pour chaque position de contrôle, une étape S18 de vérification par calcul que toute la zone 23 est dans un champ de détection du capteur 13, sans élément masqué, en utilisant le modèle numérique de la pièce 5 et les caractéristiques du capteur 13.

L'étape S18 est détaillée sur la figure 2.

L'étape de vérification S18 comprend une sous-étape de discrétisation S20 comportant les opérations suivantes :
- opération S22 : discrétisation de la zone 23 en surfaces unitaires 25;
- opération S24 : pour chaque surface unitaire 25, détermination d'un barycentre G de la surface unitaire 25.

Les surfaces unitaires 25 sont par exemple de forme triangulaire (voir figure 7) et de taille choisie pour permettre une vérification fine de la zone 23, sans toutefois entraîner un temps de calcul excessif. Ensemble, les surfaces unitaires 25 couvrent toute la zone 23.

Le barycentre G de la surface unitaire 25 est le point géométrique ayant pour coordonnées la moyenne arithmétique des coordonnées de tous les points de la surface unitaire 25.

Avantageusement, l'étape de vérification par calcul S18 comprend une sous-étape S26 de vérification que, pour chaque surface unitaire 25, le barycentre G de ladite surface unitaire 25 est dans le champ de détection du capteur 13.

Avantageusement, l'étape de vérification par calcul S18 comprend une sous-étape de tracé de rayons S28 (figure 8) comportant pour chaque surface unitaire 25 les opérations suivantes :
- opération S30 : déterminer une droite d raccordant le capteur 13 au barycentre G de la surface unitaire 25;
- opération S32 : vérifier si une autre surface unitaire 25 coupe ladite droite entre le capteur 13 et ledit barycentre G.

La droite d représente un rayon lumineux allant de la surface unitaire 25 au capteur 13.

Quand le capteur 13 est de type optique, la droite d va du point focal du capteur 13 au barycentre G.

Avantageusement, l'étape de vérification par calcul S18 comprend une sous-étape de vérification d'angle S34 (figure 9), comportant pour chaque surface unitaire 25 les opérations suivantes :
- opération S36 : déterminer une normale N à la surface unitaire 25 ;
- opération S38 : déterminer une droite d raccordant le capteur 13 au barycentre G de la surface unitaire 25;
- opération S40 : vérifier qu'un angle θ entre la normale N et ladite droite d est inférieur à un seuil prédéterminé.

La droite d représente un rayon lumineux allant de la surface unitaire 25 au capteur 13.

Quand le capteur 13 est de type optique, la droite d va du point focal du capteur 13 au barycentre G.

Le seuil est par exemple de 60°, de préférence de 45°, encore de préférence de 30°.

Si l'angle θ est supérieur au seuil, les défauts dans la surface unitaire 25 ne peuvent pas être détectés avec suffisamment de netteté par le capteur 13, notamment quand celui-ci est de type optique.

L'étape de vérification par calcul S18 comporte typiquement à la fois les sous-étapes S26, S28 et S34.

En variante, l'étape de vérification par calcul S18 ne comporte qu'une ou deux des sous-étapes S26, S28 et S34.

De préférence, elle comporte au moins la sous-étape de tracé de rayons S28.

Ainsi, la sous-étape de vérification par calcul S28 aboutit à la conclusion que toute la zone 23 n'est pas dans un champ de détection du capteur 13 et qu'il existe au moins un élément masqué, si, pour au moins une des surfaces unitaires 25 :
- le barycentre G est hors du champ de détection du capteur 13 ; ou
- une autre surface unitaire 25 coupe la droite d entre le capteur 13 et ledit barycentre G ; ou
- l'angle θ entre la normale N et la droite d est supérieur au seuil prédéterminé.

Les étapes S16 et S18 sont effectuées avantageusement en utilisant le logiciel de simulation utilisé aux étapes S12 et S14. Des modules dédiés sont dans ce cas intégrés dans ledit logiciel.

Le procédé comporte encore une étape S42 de vérification par calcul que toute la surface 3 est contrôlable pour le capteur 13, en utilisant les résultats des étapes de vérification pour chaque zone 23.

Pour cela, les zones 23 sont superposées sur le modèle numérique de la surface 3. Les opérations suivantes sont ensuite effectuées :
- Vérification si chaque point de la surface 3 est couvert par une des zones 23 ;
- Dans le cas où, à au moins une position de contrôle, au moins une des surfaces unitaires 25 n'est pas dans le champ de détection du capteur, vérification si la ou les surfaces unitaires 25 se trouvent dans le champ de détection du capteur pour une autre position de contrôle.

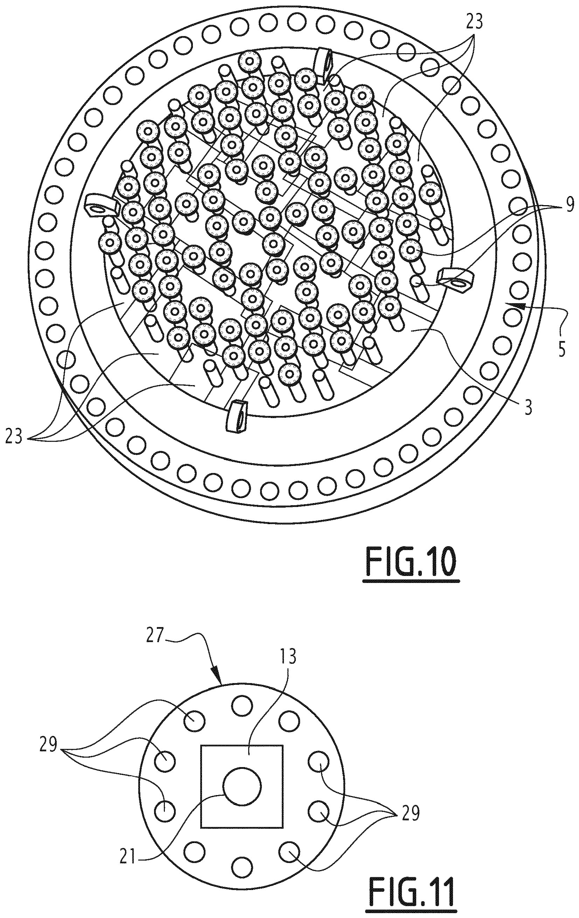

La figure 10 illustre les zones 23 superposées sur la pièce 5, pour un exemple de réalisation dans lequel la face du couvercle de cuve opposée à la surface 3 est contrôlée selon le procédé de l'invention.

Si un point de la surface 3 n'est pas couvert par une des zones 23, ou si au moins une surface unitaire 25 ne se trouve dans le champ de détection du capteur 13 pour aucune position de contrôle, alors, on considère que toute la surface 3 n'est pas contrôlable.

L'étape S42 est effectuée avantageusement en utilisant le logiciel de simulation utilisé aux étapes S12, S14, S16 et S18.

Si toute la surface 3 n'est pas contrôlable, le procédé prévoit un ajout d'au moins une position de contrôle, et/ou une modification d'au moins une des positions de contrôle, et/ou une modification d'au moins une des caractéristiques du capteur.

Une itération supplémentaire du procédé est alors effectuée, à partir de l'étape S12 ou de l'étape S14.

Les étapes S12, S14, S16, S18, S42 sont répétées jusqu'à ce que l'étape S42 mène à la conclusion que toute la surface 3 est contrôlable.

Le procédé comporte encore une étape S44 de contrôle de la surface 3 par le capteur 13 déplacé par le robot 15, en utilisant la trajectoire, les positions de contrôle et les caractéristiques du capteur 13 déterminées précédemment.

L'étape S44 est lancée si l'étape S42 mène à la conclusion que toute la surface 3 est contrôlable.

L'invention propose ainsi un procédé de contrôle non destructif de détection de défauts dans des pièces telles que des composants nucléaires, au moyen d'un capteur CND robotisé, le procédé étant spécialement adapté pour qu'aucune zone morte ne subsiste à la surface de la pièce, la couverture par ledit capteur CND robotisé étant ainsi totale.

Le procédé permet de déterminer rapidement et simplement les caractéristiques des capteurs CND pour tout type d'application, pour laquelle la détermination des couvertures de zones est difficile ou très longue à obtenir.

Le procédé comporte une phase de simulation de la couverture de zone par le capteur CND robotisé.

Le but est de n'avoir aucune zone morte et de pouvoir rapidement définir le capteur CND robotisé adéquat (forme, dimension, type d'optique : différentes focales, zoom intégré...etc...).

L'étape de simulation de la couverture de zone par un capteur CND robotisé permet d'affiner/optimiser plus rapidement les caractéristiques du capteur CND robotisé et les trajectoires du robot nécessaires pour réaliser l'inspection de la pièce.

L'étape de simulation est particulièrement utile pour la première mise en oeuvre du procédé pour une pièce donnée.

Le procédé a été décrit ci-dessus avec l'étape S12 de détermination d'une trajectoire de contrôle mise en oeuvre avant l'étape S14 de détermination de positions de contrôle. En variante, l'étape S14 est mise en œuvre avant l'étape S12, ou en même temps que l'étape S12.

Selon une variante de réalisation illustrée sur la figure 11, un éclairage 27 fixe par rapport au capteur 13 est déplacé par le robot 15. L'éclairage 27 comporte une pluralité de sources de lumière 29 réparties autour du capteur 13.

Le procédé comprend une étape de détermination de la ou des sources de lumière 29 utilisées à chaque position de contrôle.

Les sources de lumière 29 sont par exemple des diodes électroluminescentes (DEL ou LED en anglais).

La détermination de la ou des sources de lumière 29 utilisées à chaque position de contrôle est effectuée par calcul, par exemple au cours de l'étape de vérification S26.

Différentes configurations d'éclairage sont testées, chaque configuration correspondant à une combinaison différente de sources de lumière 29 allumées, et la configuration permettant la meilleure détection est retenue. Un opérateur détermine visuellement, à partir des images simulées, dans quelle configuration d'éclairage le défaut est le mieux rehaussé visuellement et se différencie le plus nettement de son environnement.

## Revendications

1. Procédé de contrôle de la surface (3) d'une pièce (5) par un capteur (13) déplacé par un robot (15), le procédé comprenant les étapes suivantes:
- obtention d'un modèle numérique de la pièce (5), incluant la surface (3) à contrôler;
- détermination d'une trajectoire de contrôle pour le capteur (13) par rapport à la surface (3) en fonction des caractéristiques du robot (15) en utilisant le modèle numérique de la pièce (5) ;
- détermination de positions de contrôle du capteur (13) le long de la trajectoire en fonction de caractéristiques du capteur (13) en utilisant le modèle numérique de la pièce (5), les caractéristiques du capteur (13) comprenant au moins une distance entre le capteur (13) et la surface (3), et une orientation du capteur (13) par rapport à la surface (3);
- détermination par calcul d'une zone (23) de la surface (3) contrôlée par le capteur (13) à chaque position de contrôle en utilisant le modèle numérique de la pièce (5) et les caractéristiques du capteur (13), et vérification par calcul que toute la zone (23) est dans un champ de détection du capteur (13), sans élément masqué, en utilisant le modèle numérique de la pièce (5) et les caractéristiques du capteur (13);
- vérification par calcul que toute la surface (3) est contrôlable pour le capteur (13), en utilisant les résultats des étapes de vérification pour chaque zone (23);
- si toute la surface (3) n'est pas contrôlable, ajout d'une position de contrôle, et/ou modification d'au moins une des positions de contrôle, et/ou modification d'au moins une des caractéristiques du capteur (13);
- si toute la surface (3) est contrôlable, contrôle de la surface (3) par le capteur (13) déplacé par le robot (15), en utilisant la trajectoire, les positions de contrôle et les caractéristiques du capteur (13) déterminées,
**caractérisé en ce que** l'étape de vérification par calcul que toute la zone (23) est dans le champ de détection du capteur (13), sans élément masqué, comprend une sous-étape de discrétisation comportant les opérations suivantes :
- discrétisation de la zone (23) en surfaces unitaires (25) ;
- pour chaque surface unitaire (25), détermination d'un barycentre (G) de la surface unitaire (25), et
l'étape de vérification par calcul que toute la zone (23) est dans le champ de détection du capteur (13), sans élément masqué, comprenant une sous-étape de vérification que, pour chaque surface unitaire (25), le barycentre (G) de ladite surface unitaire (25) est dans le champ de détection du capteur (13).

2. Procédé selon la revendication 1, dans lequel le capteur (13) est de type optique, les caractéristiques du capteur (13) comprenant aussi un angle d'ouverture du champ optique et une profondeur de champ.

3. Procédé selon la revendication 2, dans lequel le capteur (13) comprend un zoom, les caractéristiques du capteur (13) comprenant aussi une plage de distance focale du zoom.

4. Procédé selon l'une quelconque des revendications précédentes, dans lequel l'étape de vérification par calcul que toute la zone (23) est dans le champ de détection du capteur (13), sans élément masqué, comprend une sous-étape de tracé de rayons comportant pour chaque surface unitaire (25) les opérations suivantes :
- déterminer une droite (d) raccordant le capteur (13) au barycentre (G) de la surface unitaire (25) ;
- vérifier si une autre surface unitaire (25) coupe ladite droite (d) entre le capteur (13) et ledit barycentre (G).

5. Procédé selon l'une quelconque des revendications précédentes, dans lequel l'étape de vérification par calcul que toute la zone (23) est dans le champ de détection du capteur (13), sans élément masqué, comprend une sous-étape de vérification d'angle, comportant pour chaque surface unitaire (25) les opérations suivantes :
- déterminer une normale (N) à la surface unitaire (25) ;
- déterminer une droite (d) raccordant le capteur (13) au barycentre (G) de la surface unitaire (25) ;
- vérifier qu'un angle entre la normale (N) et ladite droite (d) est inférieur à un seuil prédéterminé, par exemple 60°.

6. Procédé selon l'une quelconque des revendications précédentes, dans lequel les étapes de détermination d'une trajectoire de contrôle, de détermination de positions de contrôle, de détermination par calcul d'une zone (23) de la surface (3) contrôlée par le capteur (13) à chaque position de contrôle, de vérification par calcul que toute la zone (23) est dans un champ de détection du capteur (13), sans élément masqué, et de vérification par calcul que toute la surface (23) est contrôlable pour le capteur (13), sont réalisées en utilisant un outil numérique de simulation 3D unique.

7. Procédé selon l'une quelconque des revendications précédentes, dans lequel la pièce (5) est une pièce d'un réacteur nucléaire, par exemple un couvercle de cuve de réacteur nucléaire.

8. Procédé selon l'une quelconque des revendications précédentes, dans lequel un éclairage (27) fixe par rapport au capteur (13) est déplacé par le robot (15), l'éclairage (27) comportant une pluralité de sources de lumière (29) réparties autour du capteur (13), le procédé comprenant une étape de détermination de la ou des sources de lumière (29) utilisées à chaque position de contrôle.

## Patentansprüche

1. Verfahren zum Prüfen der Oberfläche (3) eines Teils (5) durch einen Sensor (13), der von einem Roboter (15) bewegt wird, das Verfahren umfassend die folgenden Schritte:
- Erlangen eines digitalen Modells des Teils (5), das die zu prüfende Oberfläche (3) beinhaltet;
- Bestimmen einer Kontrollstrecke für den Sensor (13) in Bezug auf die Oberfläche (3) abhängig von den Eigenschaften des Roboters (15) unter Verwendung des digitalen Modells des Teils (5);
- Bestimmen von Kontrollpositionen des Sensors (13) entlang der Strecke abhängig von Eigenschaften des Sensors (13) unter Verwendung des digitalen Modells des Teils (5), die Eigenschaften des Sensors (13) umfassend mindestens einen Abstand zwischen dem Sensor (13) und der Oberfläche (3) und eine Ausrichtung des Sensors (13) in Bezug auf die Oberfläche (3);
- rechnerisches Bestimmen eines Bereichs (23) der Oberfläche (3), der von dem Sensor (13) an jeder Prüfposition überwacht wird, unter Verwendung des digitalen Modells des Teils (5) und der Merkmale des Sensors (13), und Überprüfung durch Berechnung, dass der gesamte Bereich (23) in einem Erfassungsfeld des Sensors (13) ist, ohne verdeckte Elemente, unter Verwendung des digitalen Modells des Teils (5) und der Merkmale des Sensors (13);
- rechnerisches Überprüfen, ob die gesamte Oberfläche (3) für den Sensor (13) überprüfbar ist, unter Verwendung der Resultate der Überprüfungsschritte für jeden Bereich (23);
- wenn nicht die gesamte Oberfläche (3) kontrollierbar ist, Hinzufügen einer Kontrollposition und/oder Ändern mindestens einer der Kontrollpositionen und/oder Ändern mindestens einer der Eigenschaften des Sensors (13);
- wenn die gesamte Oberfläche (3) kontrollierbar ist, Kontrollieren der Oberfläche (3) durch den Sensor (13), der von dem Roboter (15) bewegt wird, unter Verwendung der bestimmten Strecke, der Kontrollpositionen und der Eigenschaften des Sensors (13),
**dadurch gekennzeichnet, dass** der Schritt eines rechnerischen Überprüfens, ob der gesamte Bereich (23) ohne verdeckte Elemente in dem Erfassungsfeld des Sensors (13) ist, einen Diskretisierungs-Unterschritt umfasst, umfassend die folgenden Schritte:
- Diskretisieren des Bereichs (23) in Einheitsflächen (25);
- für jede Einheitsfläche (25), Bestimmen eines Schwerpunkts (G) der Einheitsfläche (25), und
der Schritt eines rechnerischen Überprüfens, ob der gesamte Bereich (23) ohne verdeckte Elemente in dem Erfassungsfeld des Sensors (13) ist, umfassend einen Unterschritt eines Überprüfens, ob der Schwerpunkt (G) der Einheitsfläche (25) für jede Einheitsfläche (25) in dem Erfassungsfeld des Sensors (13) ist.

2. Verfahren nach Anspruch 1, wobei der Sensor (13) von einem optischen Typ ist, wobei die Eigenschaften des Sensors (13) auch einen Öffnungswinkel des optischen Felds und eine Schärfentiefe umfassen.

3. Verfahren nach Anspruch 2, wobei der Sensor (13) ein Zoom umfasst, wobei die Eigenschaften des Sensors (13) auch einen Brennweitenbereich des Zooms umfassen.

4. Verfahren nach einem der vorherigen Ansprüche, wobei der Schritt eines rechnerischen Überprüfens, ob der gesamte Bereich (23) ohne verdeckte Elemente in dem Erfassungsbereich des Sensors (13) ist, einen Unterschritt eines Verfolgens von Strahlen, umfassend für jede Einheitsfläche (25) die folgenden Vorgänge:
- Bestimmen einer Geraden (d), die den Sensor (13) mit dem Schwerpunkt (G) der Einheitsfläche (25) verbindet;
- Überprüfen, ob eine andere Einheitsfläche (25) die genannte Gerade (d) zwischen dem Sensor (13) und dem genannten Schwerpunkt (G) schneidet.

5. Verfahren nach einem der vorherigen Ansprüche, wobei der Schritt eines rechnerischen Überprüfens, ob der gesamte Bereich (23) ohne verdeckte Elemente in dem Erfassungsfeld des Sensors (13) ist, einen Unterschritt einer Winkelüberprüfung umfasst, umfassend für jede Einheitsfläche (25) die folgenden Schritte:
- Bestimmen einer Senkrechten (N) zu der Einheitsfläche (25);
- Bestimmen einer Geraden (d), die den Sensor (13) mit dem Schwerpunkt (G) der Einheitsfläche (25) verbindet;
- Überprüfen, ob ein Winkel zwischen der Senkrechten (N) und der Geraden (d) kleiner ist als ein vorbestimmter Schwellenwert, z. B. 60°.

6. Verfahren nach einem der vorherigen Ansprüche, wobei die Schritte eines Bestimmens einer Kontrollstrecke, eines Bestimmens von Kontrollpositionen, eines rechnerischen Bestimmens eines Bereichs (23) der Oberfläche (3), der von dem Sensor (13) an jeder Kontrollposition kontrolliert wird, eines rechnerischen Überprüfens, dass der gesamte Bereich (23) ohne verdeckte Elemente in einem Erfassungsfeld des Sensors (13) ist, und eines rechnerischen Überprüfens, ob der gesamte Bereich (23) für den Sensor (13) kontrollierbar ist, unter Verwendung eines einzelnen digitalen 3D-Simulationswerkzeugs durchgeführt werden.

7. Verfahren nach einem der vorherigen Ansprüche, wobei das Teil (5) ein Teil eines Kernreaktors ist, z. B. ein Deckel eines Kernreaktorbehälters.

8. Verfahren nach einem der vorherigen Ansprüche, wobei eine Beleuchtung (27), die in Bezug auf den Sensor (13) feststehend ist, durch den Roboter (15) bewegt wird, die Beleuchtung (27) umfassend eine Vielzahl von Lichtquellen (29), die um den Sensor (13) verteilt sind, das Verfahren umfassend einen Schritt zum Bestimmen der Lichtquelle(n) (29), die an jeder Kontrollposition verwendet wird/werden.

## Claims

1. A method for inspecting the surface (3) of a workpiece (5) by a sensor (13) moved by a robot (15), the method comprising the following steps:
- obtaining a digital model of the workpiece (5), including the surface (3) to be inspected;
- determining an inspection path for the sensor (13) relative to the surface (3) based on the characteristics of the robot (15) using the digital model of the workpiece (5);
- determining inspection positions of the sensor (13) along the path as a function of characteristics of the sensor (13) using the digital model of the workpiece (5), the characteristics of the sensor (13) comprising at least a distance between the sensor (13) and the surface (3), and an orientation of the sensor (13) relative to the surface (3);
- computationally determining an area (23) of the surface (3) inspected by the sensor (13) at each inspection position using the digital model of the workpiece (5) and the characteristics of the sensor (13), and computationally verifying that the entire area (23) is within a detection field of the sensor (13), without any concealed elements, using the digital model of the workpiece (5) and the characteristics of the sensor (13);
- computationally verifying that the entire surface (3) is inspectable for the sensor (13), using the results of the verification steps for each area (23);
- if the entire surface (3) is not inspectable, adding an inspection position, and/or changing at least one of the inspection positions, and/or changing at least one of the characteristics of the sensor (13);
- if the entire surface (3) is inspectable, inspecting the surface (3) by the sensor (13) moved by the robot (15), using the determined path, inspection positions, and characteristics of the sensor (13),
**characterised in that** the step of computationally verifying that the entire area (23) is within the detection field of the sensor (13), without any concealed elements, comprises a segmentation sub-step comprising the following operations:
- segmenting the area (23) into unitary surfaces (25);
- for each unitary surface (25), determining a centroid (G) of the unitary surface (25), and the step of computationally verifying that the entire area (23) is within the detection field of the sensor (13), without any concealed elements, comprising a sub-step of verifying that, for each unitary surface (25), the centroid (G) of said unitary surface (25) is within the detection field of the sensor (13)

2. The method according to claim 1, wherein the sensor (13) is of the optical type, the characteristics of the sensor (13) further comprising an aperture angle of the optical field and a depth of field.

3. The method according to claim 2, wherein the sensor (13) comprises a zoom lens, the characteristics of the sensor (13) further comprising a zoom lens focal length range.

4. The method according to any of the preceding claims, wherein the step of computationally verifying that the entire area (23) is within the detection field of the sensor (13), without any concealed elements comprises a ray-tracing sub-step comprising for each unitary surface (25) the following operations:
- determining a line (d) connecting the sensor (13) to the centroid (G) of the unitary surface (25);
- verifying whether another unitary surface (25) intersects said line (d) between the sensor (13) and said centroid (G).

5. The method according to any of the preceding claims, wherein the step of computationally verifying that the entire area (23) is within the detection field of the sensor (13), without any concealed elements comprises an angle-verifying sub-step comprising for each unitary surface (25) the following operations:
- determining a normal (N) to the unitary surface (25);
- determining a line (d) connecting the sensor (13) to the centroid (G) of the unitary surface (25);
- verifying that an angle between the normal (N) and said straight line (d) is less than a predetermined threshold, for example 60°.

6. The method according to any one of the preceding claims, wherein the steps of determining an inspection path, determining inspection positions, computationally determining an area (23) of the surface (3) inspected by the sensor (13) at each inspection position, computationally verifying that the entire area (23) is within a detection field of the sensor (13), without any concealed elements, and computationally verifying that the entire surface (23) is inspectable for the sensor (13), are performed using a single 3D digital simulation tool.

7. The method according to any of the preceding claims, wherein the workpiece (5) is a part of a nuclear reactor, for example a nuclear reactor vessel cover.

8. The method according to any one of the preceding claims, wherein a light (27) fixed relative to the sensor (13) is moved by the robot (15), the light (27) comprising a plurality of light sources (29) distributed around the sensor (13), the method comprising a step of determining the light source(s) (29) used at each inspection position.
